# EUROPEAN PATENT APPLICATION

(11) **EP 4 615 045 A1**
(43) Date of publication of application: **10.09.2025**
(21) Application number: 22963981.0
(22) Date of filing: 03.11.2022
(51) Int. Cl.: H04W 28/02

(54) **CONGESTION NOTIFICATION METHOD, APPARATUS, DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN); WU, Jinhua, Beijing 100085 (CN)
(74) Representative: Stöckeler, Ferdinand
(86) International application number: PCT/CN2022/129679
(87) International publication number: WO 2024/092671

(57) **Abstract**

The present disclosure relates to the technical field of communications, and provides a congestion notification method, an apparatus, a device, and a storage medium. If conversion occurs, a first node sends congestion-related information to a second node. Therefore, in the method provided by the present disclosure, a core network device acquires congestion-related information in a network of a wireless split architecture, and the core network device or an application server can timely adjust the rate according to the congestion-related information, thereby avoiding the situation of service delay or packet loss, and improving the quality of service.

## Description

### FIELD

The present disclosure relates to the field of communication technology, and in particular to a congestion notification method, an apparatus, a device, and a storage medium.

### BACKGROUND

In an extended reality (XR) service, variations of low latency low loss scalable throughput (L4S) marking are introduced, so as to enable useful information for rate adjustment in an application, and transmit the useful information to an application server via a core network device. The application server adjusts a data rate in time based on the useful information to reduce a delay of the XR service.

In the related art, there are the following methods for the variations of the L4S marking.

As a first method, the L4S marking is performed on a next generation radio access network (NG-RAN) node.

As a second method, the L4S marking is performed by a proxy service access (PSA) user plane function (UPF) network element based on information provided by the NG-RAN.

### SUMMARY

An object of the present disclosure is to provide a congestion notification method, an apparatus, a device and a storage medium, so as to solve the problem that a core network device cannot obtain congestion information in a wireless separation architecture.

In a first aspect, the present disclosure provides in some embodiments a congestion notification method, executed by a first node, including: in a case that congestion occurs, sending congestion-related information to a second node.

In the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that a core network device obtains the congestion-related information in a network with a wireless separation architecture, and the core network device or an application server performs rate adjustment in time based on the congestion-related information. In this way, it is able to prevent the occurrence of delay or packet loss for a service, and thereby to improve the service quality.

In a second aspect, the present disclosure provides in some embodiments a congestion notification method, executed by a second node, including: receiving congestion-related information sent by a first node; and performing a congestion-related operation based on the congestion-related information.

In a third aspect, the present disclosure provides in some embodiments a congestion notification method, executed by a third node, including: sending congestion report request information to a first node, where the congestion report request information is used to indicate whether the first node needs to perform congestion detection and/or whether the first node needs to send congestion-related information to a second node.

In a fourth aspect, the present disclosure provides in some embodiments a communication apparatus, applied to a first node, including: a sending module configured to send congestion-related information to a second node in a case that congestion occurs.

In a fifth aspect, the present disclosure provides in some embodiments a communication apparatus, applied to a second node, including: a reception module configured to receive congestion-related information sent by a first node, where the congestion-related information is used to indicate the second node to perform a congestion-related operation; and an execution module configured to perform the congestion-related operation based on the congestion-related information.

In a sixth aspect, the present disclosure provides in some embodiments a communication apparatus, applied to a third node, including: a sending module configured to send congestion report request information to a first node, where the congestion report request information is used to indicate whether the first node needs to perform congestion detection and/or whether the first node needs to send congestion-related information to a second node.

In a seventh aspect, the present disclosure provides in some embodiments a communication apparatus, including a processor. The processor is configured to call a computer program in the memory to implement the above-mentioned congestion notification method in the first aspect.

In an eighth aspect, the present disclosure provides in some embodiments a communication apparatus, including a processor. The processor is configured to call a computer program in the memory to implement the above-mentioned congestion notification method in the second aspect.

In a ninth aspect, the present disclosure provides in some embodiments a communication apparatus, including a processor. The processor is configured to call a computer program in the memory to implement the above-mentioned congestion notification method in the third aspect.

In a tenth aspect, the present disclosure provides in some embodiments a communication apparatus, including a processor and a memory. The memory is configured to store therein a computer program, and the processor is configured to execute the computer program in the memory to implement the above-mentioned congestion notification method in the first aspect.

In an eleventh aspect, the present disclosure provides in some embodiments a communication apparatus, including a processor and a memory. The memory is configured to store therein a computer program, and the processor is configured to execute the computer program in the memory to implement the above-mentioned congestion notification method in the second aspect.

In a twelfth aspect, the present disclosure provides in some embodiments a communication apparatus, including a processor and a memory. The memory is configured to store therein a computer program, and the processor is configured to execute the computer program in the memory to implement the above-mentioned congestion notification method in the third aspect.

In a thirteenth aspect, the present disclosure provides in some embodiments a communication apparatus, including a processor and an interface circuit. The interface circuit is configured to receive a code instruction and transmit the code instruction to the processor, and the processor is configured to execute the code instruction to implement the above-mentioned congestion notification method in the first aspect.

In a fourteenth aspect, the present disclosure provides in some embodiments a communication apparatus, including a processor and an interface circuit. The interface circuit is configured to receive a code instruction and transmit the code instruction to the processor, and the processor is configured to execute the code instruction to implement the above-mentioned congestion notification method in the second aspect.

In a fifteenth aspect, the present disclosure provides in some embodiments a communication apparatus, including a processor and an interface circuit. The interface circuit is configured to receive a code instruction and transmit the code instruction to the processor, and the processor is configured to execute the code instruction to implement the above-mentioned congestion notification method in the third aspect.

In a sixteenth aspect, the present disclosure provides in some embodiments a communication system, including the communication apparatuses in the fourth aspect to the sixth aspect, or including the communication apparatuses in the seventh aspect to the ninth aspect, or including the communication apparatus in the tenth aspect to the twelfth aspect, or including the communication apparatuses in the thirteenth aspect to the fifteenth aspect.

In a seventeenth aspect, the present disclosure provides in some embodiments a computer-readable storage medium storing therein an instruction for the communication apparatus. The instruction is executed to implement the congestion notification apparatus in any of the first aspect to the third aspect.

In an eighteenth aspect, the present disclosure provides in some embodiments a computer program product including a computer program. The computer program is executed by a computer to implement the congestion notification apparatus in any of the first aspect to the third aspect.

In a nineteenth aspect, the present disclosure provides in some embodiments a chip system, including at least one processor and an interface, and configured to support a communication apparatus to achieve functions involved in any of the first aspect to the third aspect, e.g., determining or processing at least one of data or information involved in the above method. In a possible design, the chip system further includes a memory configured to store therein a computer program and data desired for the communication apparatus. The chip system includes a chip, or includes a chip and other discrete elements.

In a twentieth aspect, the present disclosure provides in some embodiments a computer program. The computer program is executed by a computer to implement the congestion notification apparatus in any of the first aspect to the third aspect.

### BRIEF DESCRIPTION OF THE DRAWINGS

The above-mentioned and/or other aspects and advantages of the present disclosure may become apparent and easily understandable in the following description in conjunction with the drawings.
FIG. 1 is a schematic view showing an architecture of a communication system according to an embodiment of the present disclosure;
FIG. 2a is a flow chart of a congestion notification method according to an embodiment of the present disclosure;
FIG. 2b is another flow chart of the congestion notification method according to an embodiment of the present disclosure;
FIG. 3 is yet another flow chart of the congestion notification method according to an embodiment of the present disclosure;
FIG. 4 is still yet another flow chart of the congestion notification method according to an embodiment of the present disclosure;
FIG. 5 is still yet another flow chart of the congestion notification method according to an embodiment of the present disclosure;
FIG. 6 is still yet another flow chart of the congestion notification method according to an embodiment of the present disclosure;
FIG. 7 is still yet another flow chart of the congestion notification method according to an embodiment of the present disclosure;
FIG. 8 is a flow chart of a congestion notification method according to an embodiment of the present disclosure;
FIG. 9 is another flow chart of the congestion notification method according to an embodiment of the present disclosure;
FIG. 10 is yet another flow chart of the congestion notification method according to an embodiment of the present disclosure;
FIG. 11 is still yet another flow chart of the congestion notification method according to an embodiment of the present disclosure;
FIG. 12 is still yet another flow chart of the congestion notification method according to an embodiment of the present disclosure;
FIG. 13 is still yet another flow chart of the congestion notification method according to an embodiment of the present disclosure;
FIG. 14 is still yet another flow chart of the congestion notification method according to an embodiment of the present disclosure;
FIG. 15 is still yet another flow chart of the congestion notification method according to an embodiment of the present disclosure;
FIG. 16 is still yet another flow chart of the congestion notification method according to an embodiment of the present disclosure;
FIG. 17 is still yet another flow chart of the congestion notification method according to an embodiment of the present disclosure;
FIG. 18 is still yet another flow chart of the congestion notification method according to an embodiment of the present disclosure;
FIG. 19 is a schematic view showing a communication apparatus according to an embodiment of the present disclosure;
FIG. 20 is another schematic structure view showing the communication apparatus according to an embodiment of the present disclosure;
FIG. 21 is yet another schematic structure view showing the communication apparatus according to an embodiment of the present disclosure;
FIG. 22 is a block diagram of a user equipment (UE) according to an embodiment of the present disclosure; and
FIG. 23 is a block diagram of a network side device according to an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. They are merely examples of apparatuses and methods consistent with some aspects of the present disclosure as recited in the appended claims.

Terms used in the embodiments of the present disclosure are only for the purpose of describing specific embodiments, and shall not be construed to limit the present disclosure. As used in the embodiments of the present disclosure and the appended claims, "a/an" and "the" in a singular form are intended to include plural forms, unless clearly indicated in the context otherwise. It should be understood that the term "and/or" used herein represents and contains any one of associated listed items and all possible combinations of more than one associated listed items.

It should be understood that terms such as "first", "second" and "third" may be used in the embodiments of the present disclosure for describing various information, and the information should not be limited by these terms. These terms are only used for distinguishing information of the same type from others. For example, first information may also be referred to as second information, and similarly, the second information may also be referred to as the first information, without departing from the scope of the embodiments of the present disclosure. As used herein, the term "if" may be construed to mean "when" or "upon" or "in response to determining" depending on the context.

The embodiments of the present disclosure will be described hereinafter in details, and examples are shown in the drawings. Identical or similar reference numbers represent an identical or similar element. The following embodiments described with reference to the drawings are for illustrative purposes only, but shall not be used to limit the scope of the present disclosure.

In order to understand a congestion notification method in the embodiments of the present disclosure in a better manner, an applicable communication system will be described hereinafter at first.

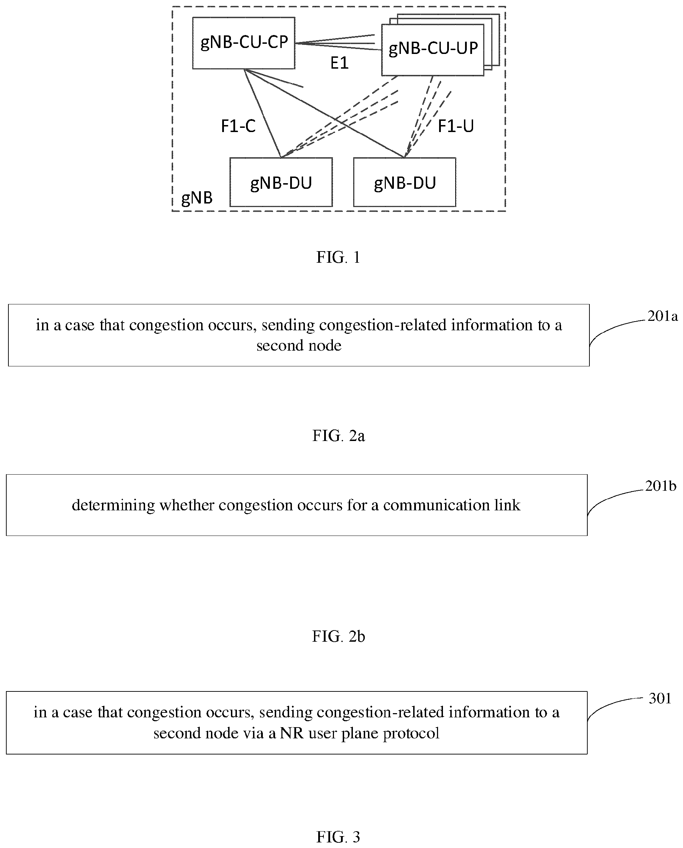

Referring to FIG. 1 which is a schematic view showing an architecture of a communication system according to an embodiment of the present disclosure, the communication system includes, but not limited to, a next Generation Node B- Central Unit-Control Plane (gNB-CU-CP), a next Generation Node B- Central Unit-User Plane (gNB-CU-UP), and a next Generation Node B- Distributed Unit (gNB-DU). The gNB-CU-CP takes charge of functions of a Packet Data Convergence Protocol (PDCP) control plane and Radio Resource Control (RRC), the gNB-CU-UP takes charge of functions of General Packet Radio Service Tunnel Protocol (GTP), a Service Data Adaptation Protocol (SDAP) user plane and a PDCP user plane, and the gNB-DU takes charge of functions of Radio Link Control (RLC), Media Access Channel (MAC) and a Physical Layer (PHY).

It should be appreciated that the technical solutions in the embodiments of the present disclosure may be applied to various communication systems, e.g., a long term evolution (LTE) system, a 5^{th}-generation (5G) mobile communication system, a 5G new radio (NR) system, or any novel mobile communication system that may occur in the future.

It should be appreciated that the communication system described herein is used to describe the technical solutions in the embodiments of the present disclosure in a clearer manner, but shall not be construed as limiting the technical solutions. It is obvious for a person skilled in the art that, along with the evolution of the system architecture as well as the emergence of new service scenarios, the technical solutions are also applicable to similar technical problems.

It should be appreciated that, in a case that the first method in the related art is adopted, a base station detects whether there is uplink congestion via a Buffer Status Report (BSR) from a UE. However, in a network with wireless separation architecture, the BSR is received by a DU, and a current mechanism does not support direct communication between the DU and a core network device, so in the network with the wireless separation architecture, the core network device cannot obtain congestion information. In a case that the second method in the related art is adopted, the current mechanism does not support the core network device to obtain the congestion information about the base station. Hence, no matter whether the first method or the second method is adopted, the current mechanism does not support the core network device to obtain the congestion information in the network with the wireless separation architecture, and the core network device or an application server cannot perform rate adjustment in time based on the congestion information, so such a situation as delay or packet loss occurs for a service, and the service quality is deteriorated.

A congestion notification method, an apparatus, a device and a storage medium provided in the embodiments of the present disclosure will be described hereinafter in details in conjunction with the drawings.

FIG. 2a is a flow chart of a congestion notification method according to an embodiment of the present disclosure, and this method is executed by a first node. As shown in FIG. 2a, the congestion notification method includes the following step.

Step 201a: in a case that congestion occurs, congestion-related information is sent to a second node.

In an embodiment of the present disclosure, the congestion-related information includes at least one of: a congestion indicator for indicating whether or not the congestion occurs (e.g., a congestion start indicator, a congestion end indicator or a congestion cause value); a congestion level for indicating a congestion severity degree and a level; a congestion time for indicating a congestion duration (e.g., a time length or a specific time period); a recommended bit rate for indicating a transmitting end to perform rate adjustment based on the recommended bit rate; an available buffer size for indicating the transmitting end to perform the rate adjustment based on the available buffer size; a remaining transmission time for indicating the transmitting end to perform the rate adjustment based on the remaining transmitting time of a data packet; a data flow direction corresponding to the congestion (e.g., uplink or downlink); bearer information corresponding to the congestion (e.g., one or more Data Radio Bearer (DRB) Identities (IDs) and/or Quality of Service (QoS) flow IDs and/or Protocol Data Unit (PDU) session IDs) ; or a cause for the congestion for indicating a cause why the congestion occurs (e.g., radio link failure or overload).

Further, in an embodiment of the present disclosure, after the first node sends the congestion-related information to the second node, the second node performs a congestion-related operation based on the congestion-related information, so as to perform the rate adjustment in time, and thereby to prevent the occurrence of delay or packet loss for a service.

In an embodiment of the present disclosure, in a case that the first node is different from the second node, a method for sending, by the first node, the congestion-related information to the second node may also be different. The contents thereof will be described in details in the subsequent embodiments.

In a word, in the congestion notification method provided in the embodiments of the present disclosure, in a case that the congestion occurs, the first node sends the congestion-related information to the second node. Hence, no matter whether the above-mentioned first method and/or second method are adopted, the first node may send the congestion-related information to the second node in the case that the congestion occurs, so that a core network device obtains the congestion-related information in a network with wireless separation architecture, and the core network device or an application server performs rate adjustment in time based on the congestion-related information. In this way, it is able to prevent the occurrence of delay or packet loss for a service, and thereby to improve the service quality.

FIG. 2b is a flow chart of a congestion notification method according to an embodiment of the present disclosure, and this method is executed by a first node. As shown in FIG. 2b, the congestion notification method includes the following step.

Step 201b: whether congestion occurs for a communication link is determined.

It should be appreciated that, in an embodiment of the present disclosure, the communication link is a logic channel for transmitting user data or a bearer for transmitting data, e.g., a PDU session.

To be specific, in an embodiment of the present disclosure, the communication link includes at least one of: a PDU session; a QoS flow; a DR); an uplink (UL); or a downlink (DL).

In an embodiment of the present disclosure, a method for determining, by the first node, whether the congestion occurs for the communication link includes at least one of: determining whether the congestion occurs for the communication link via monitoring (e.g., packet detection); or receiving packet transmission information reported by a UE, and determining whether the congestion occurs for the communication link based on the packet transmission information.

In an embodiment of the present disclosure, a method for receiving, by the first node, the packet transmission information reported by the UE and determining whether the congestion occurs for the communication link based on the packet transmission information specifically includes: receiving a BSR reported by the UE, and determining whether the congestion occurs for the communication link based on a remaining time for packet transmission in the BSR.

To be specific, in an embodiment of the present disclosure, the first node receives the BSR reported by the UE, and the BSR includes a remaining time for packet transmission and data to be uplink-transmitted in a UE buffer area. The first node determines a time for current data transmission based on the data to be uplink-transmitted in the UE buffer area and a channel resource currently supporting an uplink process. In a case that the time for the current data transmission is greater than the remaining time for the packet transmission, it means that the data to be uplink-transmitted cannot be transmitted within the remaining time or the packet transmission, and the first node determines that the congestion occurs for the communication link. In a case that the time for the current data transmission is not greater than the remaining time for the packet transmission, it means that the data to be uplink-transmitted can be transmitted within the remaining time for the packet transmission, and the first node determines that the congestion does not occur for the communication link.

In an embodiment of the present disclosure, the first node may periodically determine whether the congestion occurs for the communication link. In another embodiment of the present disclosure, the first node may determine whether the congestion occurs for the communication link upon the receipt of an indication indicating that congestion detection needs to be performed. The contents thereof will be described in details in the subsequent embodiments.

In a word, in the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that a core network device obtains the congestion-related information in a network with wireless separation architecture, and the core network device or an application service performs rate adjustment in time based on the congestion-related information. In this way, it is able to prevent the occurrence of a service delay or a packet loss, and thereby to improve the service quality.

It should be appreciated that, in an embodiment of the present disclosure, the congestion notification method provides in the embodiments of the present disclosure is further associated with types of the first node and the second node. In a case that the first node is different from the second node, specific steps of the congestion notification method may also be different. The congestion notification method will be described in details hereinafter in a case that the first node is different from the second node.

FIG. 3 is a flow chart of a congestion notification method according to an embodiment of the present disclosure, and this method is executed by a first node. In FIG. 3, the first node may be a gNB-DU, and a second node may be a gNB-CU-UP. As shown in FIG. 3, the congestion notification method includes the following step.

Step 301: in a case that congestion occurs, congestion-related information is sent to the second node via a new radio (NR) user plane protocol.

In an embodiment of the present disclosure, a method for sending, by the first node, the congestion-related information to the second node via the NR user plane protocol includes: generating, by the first node, a frame including congestion information, and sending the frame including the congestion information to the second node via the NR user plane protocol. The frame including the congestion information includes the congestion-related information.

In an embodiment of the present disclosure, the first node may generate the frame including the congestion information in various formats.

To be specific, in an embodiment of the present disclosure, the first node may generate a DL DATA DELIVERY STATUS frame, and sends the DL DATA DELIVERY STATUS frame to the second node via the NR user plane protocol. The DL DATA DELIVERY STATUS frame corresponds to a PDU type 1.

In an embodiment of the present disclosure, in a case that the first node generates the DL DATA DELIVERY STATUS frame and the PDU type is 1, the DL DATA DELIVERY STATUS frame includes 8 bits for indicating a cause for the congestion. Based on this, a new cause value is used in the congestion-related information to indicate the cause for the congestion.

For example, in an embodiment of the present disclosure, Value range: {0=UNKNOWN, 1=RADIO LINK OUTAGE, 2=RADIO LINK RESUME, 3=UL RADIO LINK OUTAGE, 4=DL RADIO LINK OUTAGE, 5=UL RADIO LINK RESUME, 6=DL RADIO LINK RESUME, 7=UL CONGESTION, 8=DL CONGESTION, 9-228=reserved for future value extensions, 229-255=reserved for test purposes}.

In another embodiment of the present disclosure, the first node may generate a new frame format, and send the new frame format to the second node via the NR user plane protocol. For example, in an embodiment of the present disclosure, the new frame format is CONGESTION STATUS or CONGESTION FEEDBACK.

It should be appreciated that, in an embodiment of the present disclosure, in Step 301, a method for sending, by the first node, the congestion-related information to the second node may be applied to variations of the L4S marking in the above-mentioned first method and second method. In other words, no matter whether the first method or the second method is adopted, the core network device may obtain the congestion-related information in the network with the wireless separation architecture through Step 301, and perform the rate adjustment in time based on the congestion-related information, so as to prevent the occurrence of the delay for the service.

In a word, in the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that the core network device obtains the congestion-related information in the network with the wireless separation architecture, and the core network device or the application service performs rate adjustment in time based on the congestion-related information. In this way, it is able to prevent the occurrence of a service delay or a packet loss, and thereby to improve the service quality.

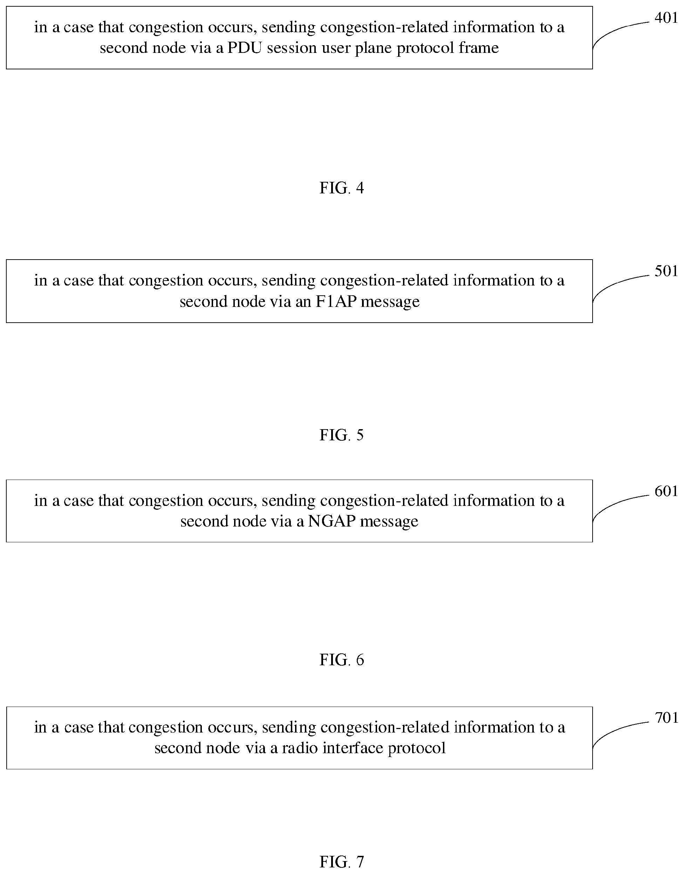

FIG. 4 is a flow chart of a congestion notification method according to an embodiment of the present disclosure, and this method is executed by a first node. In FIG. 4, the first node is a base station, and a second node is a user plane node of a core network. As shown in FIG. 4, the congestion notification method includes the following step.

Step 401: in a case that congestion occurs, congestion-related information is sent to the second node via a PDU session user plane protocol frame.

In an embodiment of the present disclosure, a method for sending, by the first node, the congestion-related information to the second node via the PDU session user plane protocol frame includes: sending, by the first node, the congestion-related information to the second node via an UL PDU session information frame sent by a NG-RAN to a UPF. The UL PDU session information frame corresponds to a PDU type 1.

In another embodiment of the present disclosure, the first node sends the congestion-related information to the second node via a new user plane frame sent by the NG-RAN to the UPF. For example, in an embodiment of the present disclosure, the new user plane frame is Congestion Information.

In a word, in the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that the core network device obtains the congestion-related information in the network with the wireless separation architecture, and the core network device or the application service performs rate adjustment in time based on the congestion-related information. In this way, it is able to prevent the occurrence of a service delay or a packet loss, and thereby to improve the service quality.

FIG. 5 is a flow chart of a congestion notification method according to an embodiment of the present disclosure, and this method is executed by a first node. In FIG. 5, the first node is a gNB-DU, and a second node is a gNB-CU-CP or a gNB-CU. As shown in FIG. 5, the congestion notification method includes the following step.

Step 501: in a case that congestion occurs, congestion-related information is sent to the second node via an F1 Application Protocol (F1AP) message.

In a word, in the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that the core network device obtains the congestion-related information in the network with the wireless separation architecture, and the core network device or the application service performs rate adjustment in time based on the congestion-related information. In this way, it is able to prevent the occurrence of a service delay or a packet loss, and thereby to improve the service quality.

FIG. 6 is a flow chart of a congestion notification method according to an embodiment of the present disclosure, and this method is executed by a first node. In FIG. 6, the first node is a base station, and a second node is a control plane node of a core network (e.g., an Access and Mobility Management Function (AMF) or a Session Management function (SMF)). As shown in FIG. 6, the congestion notification method includes the following step.

Step 601: in a case that congestion occurs, congestion-related information is sent to the second node via a next generation application protocol (NGAP) message.

In a word, in the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that the core network device obtains the congestion-related information in the network with the wireless separation architecture, and the core network device or the application service performs rate adjustment in time based on the congestion-related information. In this way, it is able to prevent the occurrence of a service delay or a packet loss, and thereby to improve the service quality.

FIG. 7 is a flow chart of a congestion notification method according to an embodiment of the present disclosure, and this method is executed by a first node. In FIG. 7, the first node is a base station, and a second node is a UE. As shown in FIG. 7, the congestion notification method includes the following step.

Step 701: in a case that congestion occurs, congestion-related information is sent to the second node via a radio interface protocol.

In an embodiment of the present disclosure, a method for sending the congestion-related information to the second node via the radio interface protocol includes sending the congestion-related information to the second node via a RRC signaling, a MAC signaling or a PHY signaling.

In a word, in the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that the core network device obtains the congestion-related information in the network with the wireless separation architecture, and the core network device or the application service performs rate adjustment in time based on the congestion-related information. In this way, it is able to prevent the occurrence of a service delay or a packet loss, and thereby to improve the service quality.

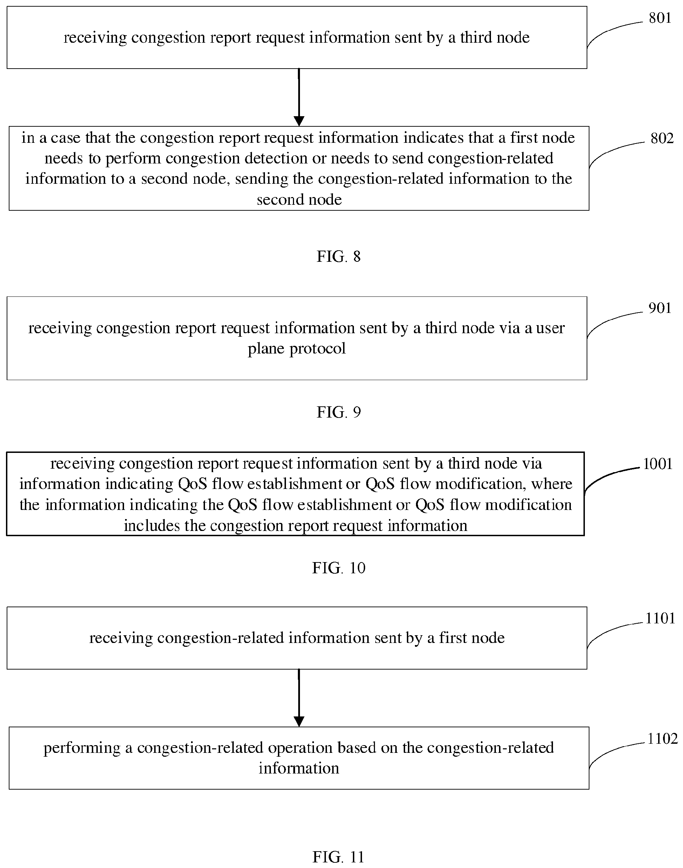

FIG. 8 is a flow chart of a congestion notification method according to an embodiment of the present disclosure, and this method is executed by a first node. As shown in FIG. 8, the congestion notification method includes the following steps.

Step 801: congestion report request information sent by a third node is received.

In an embodiment of the present disclosure, the congestion report request information is used to indicate whether the first node needs to perform congestion detection and/or whether the first node needs to send congestion-related information to a second node.

In an embodiment of the present disclosure, the congestion report request information includes at least one of: congestion request indication information; a threshold reported in a congestion request; bearer information corresponding to the congestion request; a data flow direction corresponding to the congestion request; or a congestion indication frame or bit.

To be specific, in an embodiment of the present disclosure, the congestion request indication information includes N bits, where N is a positive integer. For example, in an embodiment of the present disclosure, in a case that the congestion request indication information includes 2 bits and has a value of 01, it indicates that the first node needs to perform the congestion detection. In a case that the congestion request indication information has a value of 10, it indicates that the first node needs to send the congestion-related information to the second node. In a case that the congestion request indication information has a value of 11, it indicates that the first node needs to perform the congestion detection and send the congestion-related information to the second node. In a case that the congestion request indication information has a value of 00, it indicates that the first node does not need to perform the congestion detection and does not need to send the congestion-related information to the second node.

In an embodiment of the present disclosure, the threshold reported in the congestion request includes, but not limited to, a buffer size threshold, a threshold of a waiting time of a data packet, and a threshold of a remaining transmission time of the data packet. In an embodiment of the present disclosure, upon the receipt of the congestion report request information, the first node needs to send the congestion-related information to the second node in a case that the threshold reported in the congestion request is exceeded or not exceeded.

For example, in an embodiment of the present disclosure, in a case that the threshold reported in the congestion request is the threshold of the remaining transmission time of the data packet, a current remaining transmission time of the data packet is compared with the threshold, and in a case that the current remaining transmission time of the data packet is greater than the threshold, the first node needs to send the congestion-related information to the second node.

Further, in an embodiment of the present disclosure, the bearer information corresponding to the congestion request includes at least one of a PDU session, a QoS flow or a DRB.

Further, in an embodiment of the present disclosure, the bearer information corresponding to the congestion request includes one or more PDU session IDs, QoS flow IDs and/or DRB IDs, and it is used to indicate a specific bearer or communication link on which congestion measurement needs to be performed.

For example, in an embodiment of the present disclosure, in a case that the bearer information corresponding to the congestion request includes at least one PDU session ID, the first node needs to perform the congestion detection on a bearer or communication link corresponding to the PDU session ID, and in a case that congestion occurs for the bearer or communication link corresponding to the PDU session ID, the first node sends the congestion-related information to the second node.

For example, in an embodiment of the present disclosure, in a case that the bearer information corresponding to the congestion request includes at least one QoS flow ID, the first node needs to perform the congestion detection on a bearer or communication link corresponding to the QoS flow ID, and in a case that the congestion occurs for the bearer or communication link corresponding to the QoS flow ID, the first node sends the congestion-related information to the second node.

For example, in an embodiment of the present disclosure, in a case that the bearer information corresponding to the congestion request includes at least one DRB ID, the first node needs to perform the congestion detection on a bearer or communication link corresponding to the DRB ID, and in a case that the congestion occurs for the bearer or communication link corresponding to the DRB ID, the first node sends the congestion-related information to the second node.

Further, in an embodiment of the present disclosure, the data flow direction corresponding to the congestion request includes at least one of an uplink direction or a downlink direction.

For example, in an embodiment of the present disclosure, in a case that the data flow direction corresponding to the congestion request is the uplink direction, the first node needs to perform the congestion detection on an uplink, and in a case that the congestion occurs for the uplink, the first node sends the congestion-related information to the second node.

Further, in an embodiment of the present disclosure, the congestion indication frame or bit includes a polling frame or a polling bit.

For example, in an embodiment of the present disclosure, in a case that the congestion report request information includes the polling frame or polling bit, the first node needs to perform the congestion detection and/or needs to send the congestion-related information to the second node.

It should be appreciated that, in an embodiment of the present disclosure, the third node may be the same as, or different from, the second node. In a case that the second node is the same as, or different from, the third node, a method for receiving the congestion report request information sent by the third node may also be different. The contents thereof will be described hereinafter in details in the subsequent embodiments.

Step 802: in a case that the congestion report request information indicates that the first node needs to perform the congestion detection or needs to send the congestion-related information to the second node, the congestion-related information is sent to the second node.

In an embodiment of the present disclosure, in a case that the congestion report request information indicates that the first node needs to perform the congestion detection or needs to send the congestion-related information to the second node, the first node sends the congestion-related information to the second node based on the information included in the congestion report request.

To be specific, in an embodiment of the present disclosure, in a case that the congestion report request information indicates that the first node needs to perform the congestion detection or needs to send the congestion-related information to the second node, the first node performs the congestion detection based on the congestion request report information, and in a case that the congestion is detected, sends the congestion-related information to the second node. The congestion report request information includes a condition under which the congestion detection needs to be performed. In an embodiment of the present disclosure, the condition includes at least one of a threshold reported in the congestion request, bearer information corresponding to the congestion request, or a data flow direction corresponding to the congestion request.

For example, in an embodiment of the present disclosure, in a case that the congestion report request information includes the congestion request indication information having a value of 01 and the threshold reported in the congestion request, the first node performs the congestion detection based on the threshold reported in the congestion request, and in a case that the threshold is exceeded or not exceeded, the first node sends the congestion-related information to the second node.

In a word, in the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that a core network device obtains the congestion-related information in a network with wireless separation architecture, and the core network device or an application service performs rate adjustment in time based on the congestion-related information. In this way, it is able to prevent the occurrence of a service delay or a packet loss, and thereby to improve the service quality.

FIG. 9 is a flow chart of a congestion notification method according to an embodiment of the present disclosure, and this method is executed by a first node. In FIG. 9, a second node is the same as a third node. As shown in FIG. 9, the congestion notification method includes the following step.

Step 901: congestion report request information sent by a third node is received via a user plane protocol.

In an embodiment of the present disclosure, in a case that the first node is different from the third node, a method for receiving the congestion report request information sent by the third node via the user plane protocol may be different.

To be specific, in an embodiment of the present disclosure, in a case that the first node is a base station (NG-RAN) and the third node is a core network node (AMF/SMF), the method for receiving the congestion report request information sent by the third node via the user plane protocol includes: receiving the congestion report request information sent by the third node via a NGAP message.

In another embodiment of the present disclosure, in a case that the first node is a gNB-DU and the third node is a gNB-CU or a gNB-CU-CP, the method for receiving the congestion report request information sent by the third node via the user plane protocol includes: receiving the congestion report request information sent by the third node via an F1AP message.

Further, in yet another embodiment of the present disclosure, in a case that the second node and the third node are both a gNB-CU-UP, the method for receiving the congestion report request information sent by the third node via the user plane protocol includes: receiving the congestion report request information sent by the third node via a NR user plane protocol frame. For example, in an embodiment of the present disclosure, the first node receives the congestion report request information sent by the third node via a polling frame or a polling bit.

In a word, in the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that a core network device obtains the congestion-related information in a network with wireless separation architecture, and the core network device or an application service performs rate adjustment in time based on the congestion-related information. In this way, it is able to prevent the occurrence of a service delay or a packet loss, and thereby to improve the service quality.

FIG. 10 is a flow chart of a congestion notification method according to an embodiment of the present disclosure, and this method is executed by a first node. In FIG. 10, a second node is different from a third node. As shown in FIG. 10, the congestion notification method includes the following step.

Step 1001: congestion report request information sent by the third node is received via information indicating QoS flow establishment or QoS flow modification. The information indicating the QoS flow establishment or the QoS flow modification includes the congestion report request information.

In addition, the other detailed contents in this embodiment of the present may refer to those in the above embodiments.

In a word, in the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that a core network device obtains the congestion-related information in a network with wireless separation architecture, and the core network device or an application service performs rate adjustment in time based on the congestion-related information. In this way, it is able to prevent the occurrence of a service delay or a packet loss, and thereby to improve the service quality.

FIG. 11 is a flow chart of a congestion notification method according to an embodiment of the present disclosure, and this method is executed by a second node. As shown in FIG. 11, the congestion notification method includes the following steps.

Step 1101: congestion-related information sent by a first node is received.

In an embodiment of the present disclosure, the congestion-related information includes at least one of: a congestion indicator for indicating whether or not the congestion occurs (e.g., a congestion start indicator, a congestion end indicator or a congestion cause value); a congestion level for indicating a congestion severity degree and a level; a congestion time for indicating a congestion duration (e.g., a time length or a specific time period); a recommended bit rate for indicating a transmitting end to perform rate adjustment based on the recommended bit rate; an available buffer size for indicating the transmitting end to perform the rate adjustment based on the available buffer size; a remaining transmission time for indicating the transmitting end to perform the rate adjustment based on the remaining transmitting time of a data packet; a data flow direction corresponding to the congestion (e.g., uplink or downlink); bearer information corresponding to the congestion (e.g., one or more DRB IDs and/or QoS flow IDs and/or PDU session IDs) ; or a cause for the congestion for indicating a cause why the congestion occurs (e.g., radio link failure or overload).

In an embodiment of the present disclosure, in a case that the first node is different from the second node, a method for receiving, by the second node, the congestion-related information sent by the first node may also be different. The contents thereof will be described in details in the subsequent embodiments.

Step 1102: a congestion-related operation is performed based on the congestion-related information.

In an embodiment of the present disclosure, the performing the congestion-related operation includes at least one of: performing congestion-related marking; or sending the congestion-related information to a fourth node.

In an embodiment of the present disclosure, a method for performing the congestion-related marking includes performing explicit congestion notification (ECN) marking in L4S.

To be specific, in an embodiment of the present disclosure, the second node performs the ECN marking at an Internet Protocol (IP) layer.

In another embodiment of the present disclosure, the second node performs the ECN marking at a General Packet Radio Service Tunnel Protocol (GTP-U) layer.

Further, in an embodiment of the present disclosure, in a case of sending the congestion-related information to the fourth node, the first node is a gNB-DU, the second node is a gNB-CU-UP, and the fourth node is a core network node (e.g., UPF).

In another embodiment of the present disclosure, in a case of sending the congestion-related information to the fourth node, the first node is a gNB-DU, the second node is a gNB-CU-CP, and the fourth node is a core network node (e.g., AMF or SMF).

In a word, in the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that a core network device obtains the congestion-related information in a network with wireless separation architecture, and the core network device or an application service performs rate adjustment in time based on the congestion-related information. In this way, it is able to prevent the occurrence of a service delay or a packet loss, and thereby to improve the service quality.

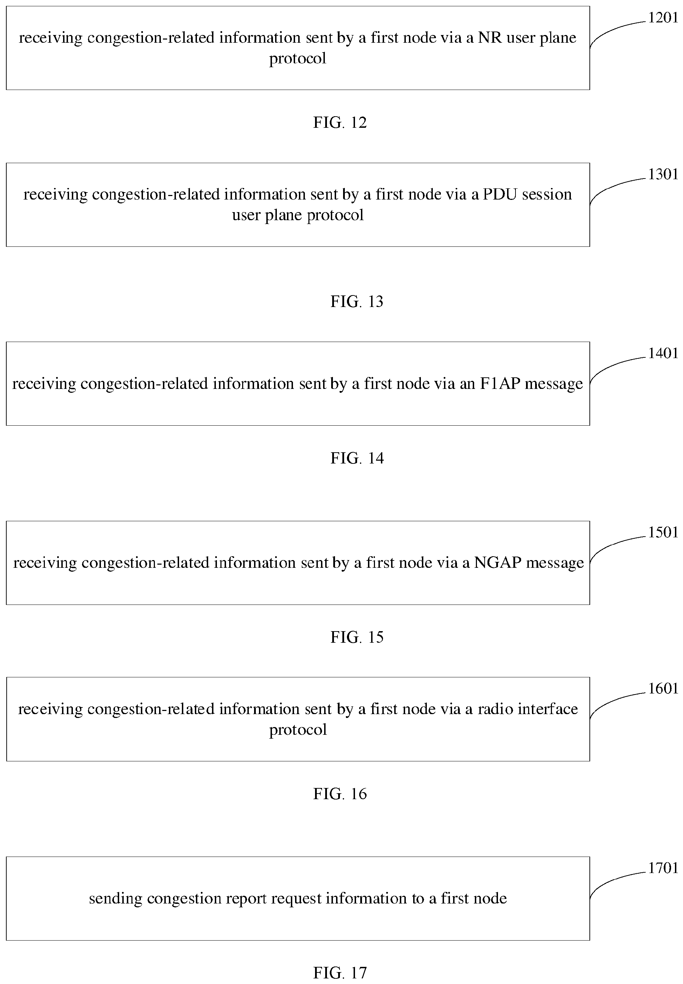

FIG. 12 is a flow chart of a congestion notification method according to an embodiment of the present disclosure, and this method is executed by a second node. In FIG. 12, a first node is a gNB-DU and the second node is a gNB-CU-UP. As shown in FIG. 12, the congestion notification method includes the following step.

Step 1201: congestion-related information sent by the first node is received via a NR user plane protocol.

In an embodiment of the present disclosure, a method for receiving the congestion-related information sent by the first node via the NR user plane protocol includes receiving a frame including congestion information sent by the first node via the NR user plane protocol, and the frame including the congestion information includes the congestion-related information.

In an embodiment of the present disclosure, the frame including the congestion information may be in various formats.

To be specific, in an embodiment of the present disclosure, a DL DATA DELIVERY STATUS frame sent by the first node is received via the NR user plane protocol, and the DL DATA DELIVERY STATUS frame corresponds to a PDU type 1.

In another embodiment of the present disclosure, a new frame format sent by the first node is received via the NR user plane protocol. For example, in an embodiment of the present disclosure, the new frame format is CONGESTION STATUS or CONGESTION FEEDBACK.

In addition, the other detailed contents in this embodiment of the present disclosure may refer to those in the above embodiments.

In a word, in the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that a core network device obtains the congestion-related information in a network with wireless separation architecture, and the core network device or an application service performs rate adjustment in time based on the congestion-related information. In this way, it is able to prevent the occurrence of a service delay or a packet loss, and thereby to improve the service quality.

FIG. 13 is a flow chart of a congestion notification method according to an embodiment of the present disclosure, and this method is executed by a second node. In FIG. 13, a first node is a base station and a second node is a user plane node of a core network. As shown in FIG. 13, the congestion notification method includes the following step.

Step 1301: congestion-related information sent by the first node is received via a PDU session user plane protocol frame.

In an embodiment of the present disclosure, a method for receiving the congestion-related information sent by the first node via the PDU session user plane protocol frame includes: receiving the congestion-related information sent by the first node via an UL PDU session information frame sent by a NG-RAN to a UPF.

In another embodiment of the present disclosure, the method for receiving the congestion-related information sent by the first node via the PDU session user plane protocol frame includes: receiving the congestion-related information sent by the first node via a new user plane frame sent by the NG-RAN to the UPF. For example, in an embodiment of the present disclosure, the new user plane frame is Congestion Information.

In addition, the other detailed contents in this embodiment may refer to those in the above embodiments.

In a word, in the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that a core network device obtains the congestion-related information in a network with wireless separation architecture, and the core network device or an application service performs rate adjustment in time based on the congestion-related information. In this way, it is able to prevent the occurrence of a service delay or a packet loss, and thereby to improve the service quality.

FIG. 14 is a flow chart of a congestion notification method according to an embodiment of the present disclosure, and this method is executed by a second node. In FIG. 14, a first node is a gNB-DU and the second node is a gNB-CU-CP or a gNB-CU. As shown in FIG. 14, the congestion notification method includes the following step.

Step 1401: congestion-related information sent by the first node is received via an F1AP message.

In addition, the other detailed contents in this embodiment may refer to those in the above embodiments.

In a word, in the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that a core network device obtains the congestion-related information in a network with wireless separation architecture, and the core network device or an application service performs rate adjustment in time based on the congestion-related information. In this way, it is able to prevent the occurrence of a service delay or a packet loss, and thereby to improve the service quality.

FIG. 15 is a flow chart of a congestion notification method according to an embodiment of the present disclosure, and this method is executed by a second node. In FIG. 15, a first node is a base station and a second node is a control plane node of a core network device (e.g., AMF/SMF). As shown in FIG. 15, the congestion notification method includes the following step.

Step 1501: congestion-related information sent by the first node is received via a NGAP message.

In addition, the other detailed contents in this embodiment may refer to those in the above embodiments.

In a word, in the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that a core network device obtains the congestion-related information in a network with wireless separation architecture, and the core network device or an application service performs rate adjustment in time based on the congestion-related information. In this way, it is able to prevent the occurrence of a service delay or a packet loss, and thereby to improve the service quality.

FIG. 16 is a flow chart of a congestion notification method according to an embodiment of the present disclosure, and this method is executed by a second node. In FIG. 16, a first node is a base station and a second node is a UE. As shown in FIG. 16, the congestion notification method includes the following step.

Step 1601: congestion-related information sent by a first node is received via a radio interface protocol.

In addition, the other detailed contents in this embodiment may refer to those in the above embodiments.

In a word, in the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that a core network device obtains the congestion-related information in a network with wireless separation architecture, and the core network device or an application service performs rate adjustment in time based on the congestion-related information. In this way, it is able to prevent the occurrence of a service delay or a packet loss, and thereby to improve the service quality.

FIG. 17 is a flow chart of a congestion notification method according to an embodiment of the present disclosure, and this method is executed by a second node. As shown in FIG. 17, the congestion notification method includes the following step.

Step 1701: congestion report request information is sent to a first node.

In an embodiment of the present disclosure, the congestion report request information is used to indicate whether the first node needs to perform congestion detection and/or whether the first node needs to send congestion-related information to the second node.

In an embodiment of the present disclosure, the congestion report request information includes at least one of: congestion request indication information; a threshold reported in a congestion request; bearer information corresponding to the congestion request; a data flow direction corresponding to the congestion request; or a congestion indication frame or bit.

Further, in an embodiment of the present disclosure, a method for sending the congestion report request information to the first node includes: sending the congestion report request information to the first node via a user plane protocol.

In an embodiment of the present disclosure, in a case that the first node is different from the second node, the method for sending the congestion report request information to the first node via the user plane protocol may also be different.

To be specific, in an embodiment of the present disclosure, in an embodiment of the present disclosure, in a case that the first node is a base station (NG-RAN) and the second node is a core network node (AMF/SMF), the method for sending the congestion report request information to the first node via the user plane protocol includes: sending the congestion report request information to the first node via a NGAP message.

In another embodiment of the present disclosure, in a case that the first node is a gNB-DU and the second node is a gNB-CU or a gNB-CU-CP, the method for sending the congestion report request information to the first node via the user plane protocol includes: sending the congestion report request information to the first node via an F1AP message.

Further, in yet another embodiment of the present disclosure, in a case that the second node is a gNB-CU-UP, the method for sending the congestion report request information to the first node via the user plane protocol includes: sending the congestion report request information to the first node via an NR user plane protocol frame. For example, in an embodiment of the present disclosure, the congestion report request information is sent to the first node via a polling frame or a polling bit.

In addition, the other detailed contents in this embodiment may refer to those in the above embodiments.

In a word, in the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that a core network device obtains the congestion-related information in a network with wireless separation architecture, and the core network device or an application service performs rate adjustment in time based on the congestion-related information. In this way, it is able to prevent the occurrence of a service delay or a packet loss, and thereby to improve the service quality.

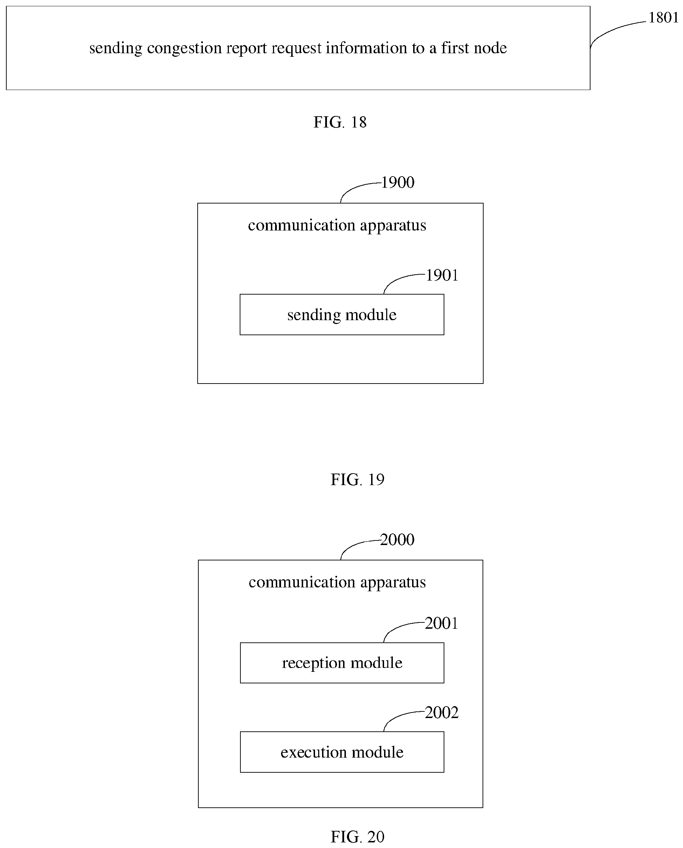

FIG. 18 is a flow chart of a congestion notification method according to an embodiment of the present disclosure, and this method is executed by a third node. As shown in FIG. 18, the congestion notification method includes the following step.

Step 1801: congestion report request information is sent to a first node.

In an embodiment of the present disclosure, the congestion report request information is used to indicate whether the first node needs to perform congestion detection and/or whether the first node needs to send congestion-related information to a second node.

In an embodiment of the present disclosure, the congestion report request information includes at least one of: congestion request indication information; a threshold reported in a congestion request; bearer information corresponding to the congestion request; a data flow direction corresponding to the congestion request; or a congestion indication frame or bit.

Further, in an embodiment of the present disclosure, a method for sending the congestion report request information to the first node includes: sending the congestion report request information to the first node via information indicating QoS flow establishment or QoS flow modification. The information indicating QoS flow establishment or QoS flow modification includes the congestion report request information.

In addition, the other detailed contents in this embodiment may refer to those in the above embodiments.

In a word, in the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that a core network device obtains the congestion-related information in a network with wireless separation architecture, and the core network device or an application service performs rate adjustment in time based on the congestion-related information. In this way, it is able to prevent the occurrence of a service delay or a packet loss, and thereby to improve the service quality.

FIG. 19 is a schematic view showing a communication apparatus according to an embodiment of the present disclosure. As shown in FIG. 19, the communication apparatus includes a sending module 1901. The sending module 1901 is configured to, in a case that congestion occurs, send congestion-related information to a second node, and the congestion-related information is used to indicate the second node to perform a congestion-related operation.

In a word, in the congestion notification method provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that a core network device obtains the congestion-related information in a network with wireless separation architecture, and the core network device or an application service performs rate adjustment in time based on the congestion-related information. In this way, it is able to prevent the occurrence of a service delay or a packet loss, and thereby to improve the service quality.

Optionally, in an embodiment of the present disclosure, the communication apparatus is further configured to: determine whether the congestion occurs for a communication link.

Optionally, in an embodiment of the present disclosure, the communication apparatus is further configured to perform at least one of: determining whether the congestion occurs for the communication link via monitoring; or receiving packet transmission information reported by a UE, and determining whether the congestion occurs for the communication link based on the packet transmission information.

Optionally, in an embodiment of the present disclosure, the communication link includes at least one of: a PDU session; a QoS flow; a DRB; an UL; or a DL.

Optionally, in an embodiment of the present disclosure, the congestion-related information includes at least one of: a congestion indicator; a congestion level; a congestion time; a recommended bit rate; an available buffer size; a remaining transmission time; a data flow direction corresponding to the congestion; bearer information corresponding to the congestion; or a cause for the congestion.

Optionally, in an embodiment of the present disclosure, the first node is a gNB-DU, and the second node is a gNB-CU-UP. The sending module 1901 is further configured to send the congestion-related information to the second node via a NR user plane protocol.

Optionally, in an embodiment of the present disclosure, the sending module 1901 is further configured to: generate a frame including congestion information, where the frame including the congestion information includes the congestion-related information; and send the frame including the congestion information to the second node via the NR user plane protocol.

Optionally, in an embodiment of the present disclosure, the first node is a gNB, and the second node a user plane node of a core network. The sending module 1901 is further configured to: send the congestion-related information to the second node via a PDU session user plane protocol frame.

Optionally, in an embodiment of the present disclosure, the first node is a gNB-DU, and the second node is a gNB-CU-CP or a gNB-CU. The sending module 1901 is further configured to: send the congestion-related information to the second node via an F1AP message.

Optionally, in an embodiment of the present disclosure, the first node is a gNB, and the second node is a control plane node of a core network. The sending module 1901 is further configured to: send the congestion-related information to the second node via a NGAP message.

Optionally, in an embodiment of the present disclosure, the first node is a gNB, and the second node is a UE. The sending module 1901 is further configured to: send the congestion-related information to the second node via a radio interface protocol.

Optionally, in an embodiment of the present disclosure, the communication apparatus is further configured to: receive congestion report request information sent by a third node, where the congestion report request information is used to indicate whether the first node needs to perform congestion detection and/or whether the first node needs to send the congestion-related information to the second node; and send the congestion-related information to the second node based on the congestion report request information.

Optionally, in an embodiment of the present disclosure, the congestion report request information includes at least one of: congestion request indication information; a threshold reported in a congestion request; bearer information corresponding to the congestion request; a data flow direction corresponding to the congestion request; or a congestion indication frame or bit.

Optionally, in an embodiment of the present disclosure, the third node is the same as, or different from, the second node.

Optionally, in an embodiment of the present disclosure, in a case that the third node is the same as the second node, the communication apparatus is further configured to: receive the congestion report request information sent by the third node via a user plane protocol.

Optionally, in an embodiment of the present disclosure, in a case that the third node is different from the second node, the communication apparatus is further configured to perform any one of: receiving the congestion report request information sent by the third node via information indicating QoS flow establishment, where the information indicating the QoS flow establishment includes the congestion report request information; or receiving the congestion report request information sent by the third node via information indicating QoS flow modification, where the information indicating the QoS flow modification includes the congestion report request information.

FIG. 20 is a schematic structure view showing a communication apparatus according to an embodiment of the present disclosure. As shown in FIG. 20, the communication apparatus includes a reception module 2001 and an execution module 2002. The reception module 2001 is configured to receive congestion-related information sent by a first node, and the execution module 2002 is configured to perform a congestion-related operation based on the congestion-related information.

In a word, according to the communication apparatus provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that a core network device obtains the congestion-related information in a network with wireless separation architecture, and the core network device or an application service performs rate adjustment in time based on the congestion-related information. In this way, it is able to prevent the occurrence of a service delay or a packet loss, and thereby to improve the service quality.

Optionally, in an embodiment of the present disclosure, the congestion-related information includes at least one of: a congestion indicator; a congestion level; a congestion time; a recommended bit rate; an available buffer size; a remaining transmission time; a data flow direction corresponding to the congestion; bearer information corresponding to the congestion; or a cause for the congestion.

Optionally, in an embodiment of the present disclosure, the first node is a gNB-DU, and the second node is a gNB-CU-UP. The reception module 2001 is further configured to receive the congestion-related information to the second node via a NR user plane protocol.

Optionally, in an embodiment of the present disclosure, the reception module 2001 is further configured to receive a frame including congestion information sent by the first node via the NR user plane protocol, and the frame including the congestion information includes the congestion-related information.

Optionally, in an embodiment of the present disclosure, the first node is a gNB, and the second node is a core network node. The reception module 2001 is further configured to: receive the congestion-related information sent by the first node via a PDU session user plane protocol frame.

Optionally, in an embodiment of the present disclosure, the first node is a gNB-DU, and the second node is a gNB-CU-CP or gNB-CU. The reception module 2001 is further configured to: receive the congestion-related information sent by the first node via an F1AP message.

Optionally, in an embodiment of the present disclosure, the first node is a gNB, and the second node is a core network node. The reception module 2001 is further configured to: receive the congestion-related information sent by the first node via a NGAP message.

Optionally, in an embodiment of the present disclosure, the first node is a gNB, and the second node is a UE. The reception module 2001 is further configured to: receive the congestion-related information sent by the first node via a radio interface protocol.

Optionally, in an embodiment of the present disclosure, the communication apparatus is further configured to: send congestion report request information to the first node. The congestion report request information is used to indicate whether the first node needs to perform congestion detection and/or whether the first node needs to send the congestion-related information to the second node.

Optionally, in an embodiment of the present disclosure, the communication apparatus is further configured to: send the congestion report request information to the first node via a user plane protocol.

Optionally, in an embodiment of the present disclosure, the congestion report request information includes at least one of: congestion request indication information; a threshold reported in a congestion request; bearer information corresponding to the congestion request; a data flow direction corresponding to the congestion request; or a congestion indication frame or bit.

Optionally, in an embodiment of the present disclosure, the congestion-related operation includes at least one of: performing congestion-related marking; or sending the congestion-related information to a fourth node.

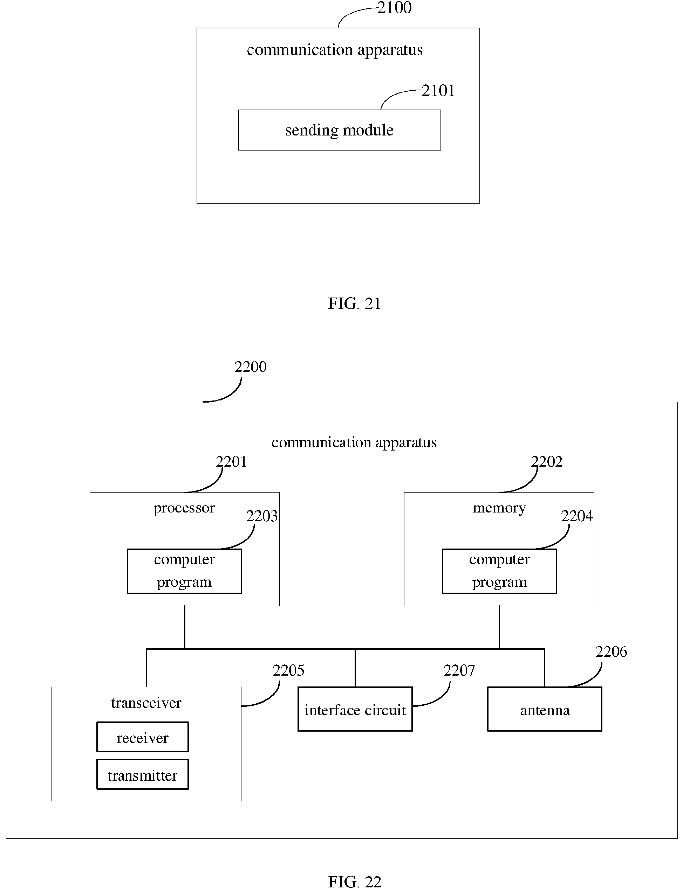

FIG. 21 is a schematic structure view showing a communication apparatus according to an embodiment of the present disclosure. As shown in FIG. 21, the communication apparatus includes a sending module 2101. The sending module 2101 is configured to send congestion report request information to a first node, and the congestion report request information is used to indicate whether the first node needs to perform congestion detection and/or whether the first node needs to send congestion-related information to a second node.

In a word, according to the communication apparatus provided in the embodiments of the present disclosure, the first node sends the congestion-related information to the second node in a case that the congestion occurs. Hence, no matter whether the above-mentioned first method and/or second method are adopted, the first node may send the congestion-related information to the second node in the case that the congestion occurs, so that a core network device obtains the congestion-related information in a network with wireless separation architecture, and the core network device or an application service performs rate adjustment in time based on the congestion-related information. In this way, it is able to prevent the occurrence of a service delay or a packet loss, and thereby to improve the service quality.

Optionally, in an embodiment of the present disclosure, the congestion report request information includes at least one of: congestion request indication information; a threshold reported in a congestion request; bearer information corresponding to the congestion request; a data flow direction corresponding to the congestion request; or a congestion indication frame or bit.

Optionally, in an embodiment of the present disclosure, the sending module 2101 is further configured to: send the congestion report request information to the first node via information indicating QoS flow establishment, where the information indicating the QoS flow establishment includes the congestion report request information; or send the congestion report request information to the first node via information indicating QoS flow modification, where the information indicating the QoS flow modification includes the congestion report request information.

FIG. 22 is a schematic view showing a communication apparatus 2200 according to an embodiment of the present disclosure. The communication apparatus 2200 may be a network device, or a terminal device, or a chip, a chip system or a processor which supports the network device to implement the above-mentioned method, or a chip, a chip system or a processor which supports the terminal device to implement the above-mentioned method. The communication apparatus is used to implement the methods in the above-mentioned method embodiments, and the implementation may refer to that mentioned in the above-mentioned method embodiments.

The communication apparatus 2200 may include one or more processors 2201. The processor 2201 may be a general-purpose processor or special-purpose processor, e.g., a baseband processor or a central processing unit. The baseband processor is configured to process a communication protocol as well as communication data, and the central processing unit is configured to control the communication apparatus (e.g., a network side device, a baseband chip, a terminal device, a terminal device chip, a DU or a CU), execute a computer program, and process data in the computer program.

Optionally, the communication apparatus 2200 further includes one or more memories 2202 storing therein a computer program 2204. The processor 2201 is configured to execute the computer program 2204, so that the communication apparatus 2200 implements the method in the above-mentioned method embodiments. Optionally, the memory 2202 further stores therein data. The communication apparatus 2200 is arranged independent of, or integrated with, the memory 2202.

Optionally, the communication apparatus 2200 further includes a transceiver 2205 and an antenna 2206. The transceiver 2205 is also called as a transceiver unit, a transceiver machine or a transceiver circuit, and it is configured to achieve a transmission function and a reception function. The transceiver 2205 includes a receiver and a transmitter. The receiver is called as a receiving machine or a reception circuit, and it is configured to achieve the reception function. The transmitter is called as a transmitting machine or a transmission circuit, and it is configured to achieve the transmission function.

Optionally, the communication apparatus 2200 further includes one or more interface circuits 2207. The interface circuit 2207 is configured to receive a code instruction and transmit it to the processor 2201. The processor 2201 executes the code instruction, so that the communication apparatus 2200 implements the method in the above-mentioned method embodiments.

In a case that the communication apparatus 2200 is a terminal device, the transceiver 2205 is configured to execute Step 201a in FIG. 2a, Step 301 in FIG. 3, Step 401 in FIG. 4, Step 501 in FIG. 5, Step 601 in FIG. 6, Step 701 in FIG. 7, Step 801 and Step 802 in FIG. 8, Step 901 in FIG. 9, Step 1001 in FIG. 10. The processor 2201 is configured to execute Step 201b in FIG. 2b.

In a case that the communication apparatus 2200 is a network device, the transceiver 2205 is configured to execute Step 1101 in FIG. 11, Step 1201 in FIG. 12, Step 1301 in FIG. 13, Step 1401 in FIG. 14, Step 1501 in FIG. 15, Step 1601 in FIG. 16, Step 1701 in FIG. 17, Step 1801 in FIG. 18, and the processor 2201 is configured to execute Step 1102 in FIG. 11.

In an embodiment of the present disclosure, the processor 2201 may include a transceiver for achieving a reception function and a transmission function. For example, the transceiver is a transceiver circuit, an interface, or an interface circuit. The transceiver circuit, the interface or the interface circuit for achieving the reception function and the transmission function may be arranged separately, or integrated with each other. The transceiver circuit, the interface or the interface circuit is configured to read and write codes/data, or transmit/or transfer signals.

In an embodiment of the present disclosure, the processor 2201 stores therein a computer program 2203, and the computer program 2203 is executed by the processor 2201, so that the communication apparatus 2200 implements the method in the above-mentioned method embodiments. The computer program 2203 may be programmed in the processor 2201, and in this case, the processor 2201 may be implemented through hardware.

In an embodiment of the present disclosure, the communication apparatus 2200 includes a circuit for implementing the transmission, reception or communication function in the above-mentioned method embodiments. The processor and the transceiver described in the embodiments of the present disclosure may be implemented in an Integrated Circuit (IC), an analog IC, a Radio Frequency IC (RFIC), a mixed-signal IC, an Application Specific Integrated Circuit (ASIC), a Printed Circuit Board (PCB) or an electronic device. The processor and the transceiver may also be manufactured through various IC processes, e.g., Complementary Metal Oxide Semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus mentioned hereinabove may be a network device or a terminal device, but the scope of the communication apparatus is not limited thereto. In addition, a structure of the communication apparatus is limited to that in FIG. 22. The communication apparatus may be an independent device, or a part of a large device. For example, the communication apparatus may be: (1) an independent IC, chip, chip system or chip sub-system; (2) a set of one or more ICs (optionally, the IC set also includes a memory member for storing therein data and a computer program; (3) an ASIC, e.g., a Modem; (4) a module capable of being embedded into the other device; (5) a receiver, a terminal device, a smart terminal device, a cellular phone, a wireless device, a handheld device, a mobile unit, a vehicle-mounted device, a network device, a cloud device, an artificial intelligence device, etc.; or (6) the other device.

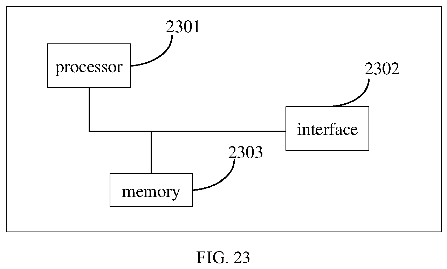

In a case that the communication apparatus is a chip or a chip system, FIG. 23 is a block diagram of the chip according to an embodiment of the present disclosure. As shown in FIG. 23, the chip includes a processor 2301 and an interface 2302. There may exist one or more processors 2301, and more than one interface 2302.

Optionally, the chip further includes a memory 2303 for storing therein necessary computer programs and data.

It should be appreciated that various illustrative logical blocks and steps listed in the embodiments of the present disclosure may be implemented through electronic hardware, computer software, or a combination thereof. Whether these functions are implemented through hardware or software depends on design requirements on an entire system and specific applications. For each specific application, various methods are used to achieve the function, which however shall not be construed as going beyond the scope of the present disclosure.

The present disclosure further provides in some embodiments a readable storage medium storing therein instructions. The instructions, when executed by a computer, achieve the functions in any of the above method embodiments.

The present disclosure further provides in some embodiments a computer program product. The computer program product is executed by a computer to achieve the functions in any of the above method embodiments.

In the above-mentioned embodiments of the present disclosure, all of, or a part of, the modules are implemented in the form of software, hardware, firmware or a combination thereof. When the modules are implemented in the form of software, all of, or a part of, the modules are implemented in the form of a computer program product. The computer program product includes one or more computer programs. When the computer programs are loaded onto and executed by a computer, all of, or a part of, the processes or functions in the embodiments of the present disclosure are generated by the computer. The computer may be a general-purpose computer, a special-purpose computer, a computer network, or any other programmable device. The computer program may be stored in a computer-readable storage medium, or transferred from one computer-readable storage medium to another computer-readable storage medium, e.g., transferred from one website, one computer, one server or one data center to another website, another computer, another server or another data center in a wired manner (e.g., through a co-axial cable, an optical fiber, or a digital subscriber line (DSL)) or a wireless manner (e.g., infrared, cordless or microwave). The computer-readable storage medium may be any available medium capable of being accessed by a computer, or a data storage device, e.g., a server or a data center including one or more available mediums. The available medium may be a magnetic medium (e.g., a floppy disc, a hard disc or magnetic tape), an optical medium (e.g., a digital video disc (DVD)), or a semiconductor medium (e.g., a solid state disk (SSD)).

It should be appreciated that such words as "first" and "second" are used to differentiate the items from each other, but shall not be construed as limiting the scope of the present disclosure or indicating any sequence.

The expression "at least one" is used to indicate one or more, e.g., two, three, four or more, which will not be particularly defined herein. In the embodiments of the present disclosure, for technical features of the same kind, the words "first", "second", "third", "A", "B", "C" and "D" are used to differentiate these technical features, without indicating any sequence or sizes thereof.

The correspondence shown in each table in the present disclosure may be configured or predefined. Values of information in each table are for illustrative purposes only, and any other values may also be configured, which will not be particularly defined herein. In a case of configuring the correspondence between the information and parameters, it is not necessary to configure all the correspondences in the table. For example, in the table in the embodiments of the present disclosure, correspondences shown in some rows may not be configured. For another example, appropriate deformation or adjustment may be performed based on the table, e.g., splitting or combination. A name of each parameter in each table may use the other name capable of being understood by the communication apparatus, and a value of the parameter or a presentation mode thereof may also use that capable of being understood by the communication apparatus. During the implementation of each table, the other data structure may also be used, e.g., array, queue, container, stack, linear table, pointer, linked list, tree, map, structure, class, heap, or hash table.

The term "predefined" in the embodiments of the present disclosure may be understood as "defined", "defined in advance", "stored", "pre-stored", "pre-negotiated", "preconfigured", "programmed" or "pre-programed".

It should be appreciated that units and algorithm steps for instances described in the embodiments of the present disclosure may be implemented in the form of electronic hardware, or a combination of a computer program and the electronic hardware. Whether or not these functions are executed by hardware or software depends on specific applications or design constraints of the technical solution. Different methods may be adopted with respect to the specific applications so as to achieve the described functions, without departing from the scope of the present disclosure.

It should be further appreciated that, for convenience and clarification, operation procedures of the system, apparatus and units described hereinabove may refer to the corresponding procedures in the method embodiments, and thus will not be particularly defined herein.

The above embodiments are merely for illustrative purposes, but shall not be construed as limiting the scope of the present disclosure. Any person skilled in the art may make modifications and substitutions without departing from the spirit of the present disclosure, and these modifications and substitutions shall also fall within the scope of the present disclosure. Hence, the scope of the present disclosure shall be subject to the scope defined by the appended claims.

## Claims

1. A congestion notification method, executed by a first node, comprising:
in a case that congestion occurs, sending congestion-related information to a second node.

2. The congestion notification method according to claim 1, further comprising:
determining whether the congestion occurs for a communication link.

3. The congestion notification method according to claim 2, wherein determining whether the congestion occurs for the communication link comprises at least one of:
determining whether the congestion occurs for the communication link via monitoring; or
receiving packet transmission information reported by a user equipment (UE), and determining whether the congestion occurs for the communication link based on the packet transmission information.

4. The congestion notification method according to claim 3, wherein the communication link comprises at least one of:
a protocol data unit (PDU) session;
a quality of service (QoS) flow;
a data radio bearer (DRB);
an uplink (UL); or
a downlink (DL).

5. The congestion notification method according to claim 1, wherein the congestion-related information comprises at least one of:
a congestion indicator;
a congestion level;
a congestion time;
a recommended bit rate;
an available buffer size;
a remaining transmission time;
a data flow direction corresponding to the congestion;
bearer information corresponding to the congestion; or
a cause for the congestion.

6. The congestion notification method according to claim 1, wherein the first node is a next generation Node B-distributed unit (gNB-DU), and the second node is a next generation Node B-central unit-user plane (gNB-CU-UP), wherein sending the congestion-related information to the second node comprises:
sending the congestion-related information to the second node via a new radio (NR) user plane protocol.

7. The congestion notification method according to claim 6, wherein sending the congestion-related information to the second node via the NR user plane protocol comprises:
generating, by the first node, a frame comprising congestion information, wherein the frame comprising the congestion information comprises the congestion-related information; and
sending the frame comprising the congestion information to the second node via the NR user plane protocol.

8. The congestion notification method according to claim 1, wherein the first node is a gNB, and the second node a user plane node of a core network, wherein sending the congestion-related information to the second node comprises:
sending the congestion-related information to the second node via a PDU session user plane protocol frame.

9. The congestion notification method according to claim 1, wherein the first node is a gNB-DU, and the second node is a next generation Node B-central unit-control plane (gNB-CU-CP) or a gNB-CU, wherein sending the congestion-related information to the second node comprises:
sending the congestion-related information to the second node via an F1 application protocol (F1AP) message.

10. The congestion notification method according to claim 1, wherein the first node is a gNB, and the second node is a control plane node of a core network, wherein sending the congestion-related information to the second node comprises:
sending the congestion-related information to the second node via a next generation AP (NGAP) message.

11. The congestion notification method according to claim 1, wherein the first node is a gNB, and the second node is a UE, wherein sending the congestion-related information to the second node comprises:
sending the congestion-related information to the second node via a radio interface protocol.

12. The congestion notification method according to claim 1, further comprising:
receiving congestion report request information sent by a third node, wherein the congestion report request information is used to indicate whether the first node needs to perform congestion detection and/or whether the first node needs to send the congestion-related information to the second node; and
in a case that the congestion report request information indicates that the first node needs to perform the congestion detection or needs to send the congestion-related information to the second node, sending the congestion-related information to the second node.

13. The congestion notification method according to claim 12, wherein the congestion report request information comprises at least one of:
congestion request indication information;
a threshold reported in a congestion request;
bearer information corresponding to the congestion request;
a data flow direction corresponding to the congestion request; or
a congestion indication frame or bit.

14. The congestion notification method according to claim 12, wherein the third node is the same as, or different from, the second node.

15. The congestion notification method according to claim 14, wherein in a case that the third node is the same as the second node, receiving the congestion report request information sent by the third node comprises:
receiving the congestion report request information sent by the third node via a user plane protocol.

16. The congestion notification method according to claim 14, wherein in a case that the third node is different from the second node, receiving the congestion report request information sent by the third node comprises any one of:
receiving the congestion report request information sent by the third node via information indicating QoS flow establishment, wherein the information indicating the QoS flow establishment comprises the congestion report request information; or
receiving the congestion report request information sent by the third node via information indicating QoS flow modification, wherein the information indicating the QoS flow modification comprises the congestion report request information.

17. A congestion notification method, executed by a second node, comprising:
receiving congestion-related information sent by a first node; and
performing a congestion-related operation based on the congestion-related information.

18. The congestion notification method according to claim 17, wherein the congestion-related information comprises at least one of:
a congestion indicator;
a congestion level;
a congestion time;
a recommended bit rate;
an available buffer size;
a remaining transmission time;
a data flow direction corresponding to congestion;
bearer information corresponding to the congestion; or
a cause for the congestion.

19. The congestion notification method according to claim 17, wherein the first node is a gNB-DU, and the second node is a gNB-CU-UP, wherein receiving the congestion-related information sent by the first node comprises:
receiving the congestion-related information sent by the first node via a NR user plane protocol.

20. The congestion notification method according to claim 19, wherein receiving the congestion-related information sent by the first node via the NR user plane protocol comprises:
receiving a frame comprising congestion information sent by the first node via the NR user plane protocol, wherein the frame comprising the congestion information comprises the congestion-related information.

21. The congestion notification method according to claim 17, wherein the first node is a gNB, and the second node is a core network node, wherein receiving the congestion-related information sent by the first node comprises:
receiving the congestion-related information sent by the first node via a PDU session user plane protocol frame.

22. The congestion notification method according to claim 17, wherein the first node is a gNB-DU, and the second node is a gNB-CU-CP or gNB-CU, wherein receiving the congestion-related information sent by the first node comprises:
receiving the congestion-related information sent by the first node via an F1AP message.

23. The congestion notification method according to claim 17, wherein the first node is a gNB, and the second node is a core network node, wherein receiving the congestion-related information sent by the first node comprises:
receiving the congestion-related information sent by the first node via a NGAP message.

24. The congestion notification method according to claim 17, wherein the first node is a gNB, and the second node is a UE, wherein receiving the congestion-related information sent by the first node comprises:
receiving the congestion-related information sent by the first node via a radio interface protocol.

25. The congestion notification method according to claim 17, further comprising:
sending congestion report request information to the first node, wherein the congestion report request information is used to indicate whether the first node needs to perform congestion detection and/or whether the first node needs to send the congestion-related information to the second node.

26. The congestion notification method according to claim 25, wherein sending the congestion report request information to the first node comprises:
sending the congestion report request information to the first node via a user plane protocol.

27. The congestion notification method according to claim 25 or 26, wherein the congestion report request information comprises at least one of:
congestion request indication information;
a threshold reported in a congestion request;
bearer information corresponding to the congestion request;
a data flow direction corresponding to the congestion request; or
a congestion indication frame or bit.

28. The congestion notification method according to claim 17, wherein the congestion-related operation comprises at least one of:
performing congestion-related marking; or
sending the congestion-related information to a fourth node.

29. A congestion notification method, executed by a third node, comprising:
sending congestion report request information to a first node, wherein the congestion report request information is used to indicate whether the first node needs to perform congestion detection and/or whether the first node needs to send congestion-related information to a second node.

30. The congestion notification method according to claim 29, wherein the congestion report request information comprises at least one of:
congestion request indication information;
a threshold reported in a congestion request;
bearer information corresponding to the congestion request;
a data flow direction corresponding to the congestion request; or
a congestion indication frame or bit.

31. The congestion notification method according to claim 29, wherein sending the congestion report request information to the first node comprises any one of:
sending the congestion report request information to the first node via information indicating QoS flow establishment, wherein the information indicating the QoS flow establishment comprises the congestion report request information; or
sending the congestion report request information to the first node via information indicating QoS flow modification, wherein the information indicating the QoS flow modification comprises the congestion report request information.

32. A communication apparatus, applied to a first node, comprising:
a sending module configured to, in a case that congestion occurs, send congestion-related information to a second node.

33. A communication apparatus, applied to a second node, comprising:
a reception module configured to receive congestion-related information sent by a first node; and
an execution module configured to perform a congestion-related operation based on the congestion-related information.

34. A communication apparatus, applied to a third node, comprising:
a sending module configured to send congestion report request information to a first node, wherein the congestion report request information is used to indicate whether the first node needs to perform congestion detection and/or whether the first node needs to send the congestion-related information to a second node.

35. A communication apparatus, comprising a processor and a memory, wherein the memory is configured to store therein a computer program, and the processor is configured to execute the computer program stored in the memory to implement the congestion notification method according to any one of claims 1 to 16, or implement the congestion notification method according to any one of claims 17 to 28, or implement the congestion notification method according to any one of claims 29 to 31.

36. A communication apparatus, comprising a processor and an interface circuit, wherein
the interface circuit is configured to receive a code instruction and transmit the code instruction to the processor; and
the processor is configured to execute the code instruction to implement the congestion notification method according to any one of claims 1 to 16, or implement the congestion notification method according to any one of claims 17 to 28, or implement the congestion notification method according to any one of claims 29 to 31.

37. A computer-readable storage medium storing therein instructions, wherein the instructions, when executed, implement the congestion notification method according to any one of claims 1 to 16, or implement the congestion notification method according to any one of claims 17 to 28, or implement the congestion notification method according to any one of claims 29 to 31.
